# EUROPEAN PATENT SPECIFICATION

(11) **EP 3 598 016 B1**
(45) Date of publication and mention of the grant of the patent: **18.08.2021**
(21) Application number: 18183880.6
(22) Date of filing: 17.07.2018
(51) Int. Cl.: F24F 12/00, F24F 11/75, F24F 11/77, F24F 11/64, F24F 110/40

(54) **BALANCED HEAT RECOVERY UNIT AND METHOD FOR BALANCING A HEAT RECOVERY UNIT**
EINHEIT ZUR AUSGLEICHENDEN WÄRMERÜCKGEWINNUNG UND VERFAHREN ZUM AUSGLEICH EINER WÄRMERÜCKGEWINNUNGSEINHEIT
UNITÉ DE RÉCUPÉRATION DE CHALEUR ÉQUILIBRÉE ET PROCÉDÉ D'ÉQUILIBRAGE D'UNE UNITÉ DE RÉCUPÉRATION DE CHALEUR

(43) Date of publication of application: 22.01.2020
(73) Proprietor: Class Manufacturing, S.A., 28936 Mostoles-Madrid (ES)
(72) Inventor: MONSALVO SANCHEZ, Arturo, 28936 Mostoles- Madrid (ES)
(74) Representative: Urizar Anasagasti, Jesus Maria

(56) References cited:
- JP-A- H 062 903
- JP-A- 2009 264 622
- US-A1- 2008 108 295
- US-A1- 2015 096 714

## Description

Balanced heat recovery unit and method for balancing a heat recovery unit.

### Object of the invention

Modern buildings, above all residential buildings, have excellent thermal insulation, and therefore the inside of the building is well sealed from the outside, and as a result there is hardly any entrance of air from the outside to renew the air of the inside of the building, slowly creating bad air inside which eventually becomes impossible to breathe if the air is not renewed.

Air renewal is traditionally done by opening doors and/or windows to the outside, but in countries with cold climates this causes a highly significant temperature drop, and as a result, a loss in energy efficiency that thermal insulation aims to achieve. This problem is currently solved by means of devices called heat recovery units.

### Background of the invention

A heat recovery unit consists of two entirely independent and sealed airflow circuits or channels: The so-called supply channel, through which air is sucked from the outside by means of a fan or turbine and driven to the inside of the building; and the so-called exhaust channel, in which the other fan or turbine that sucks air from the inside of the building is installed, expelling it to the outside the building (outdoors). Both channels pass through the heat exchanger, in which, in spite of the fact that they never mix, the air that flows in both directions exchanges the calorific value thereof. For example, in winter, the air outside is much colder than the air inside the building, and this air (the air inside the building), when passing through the heat exchanger, loses some of its heat, proportionally increasing the temperature of an area of the heat recovery unit, such that the air that is passing through the other channel (from the outside to the inside of the building) recovers part of the temperature by making contact with this part of the exchanger. Ultimately, the air that exits the building heats the air that enters into the building by a simple crossing of both channels in the heat exchanger and, for example, if the outdoor temperature is 0ºC and the indoor temperature is 22ºC, with a heat recovery unit efficiency of 85%, the outdoor air would be supplied inside at a temperature of 18.7ºC. It is important to highlight that this temperature increase is achieved at the same time that the bad air inside the building is renewed with clean air from the outside.

The heat exchange process can also be achieved in summer, particularly in warm countries in which temperatures are usually greater than 30ºC. In these cases, the cold of the air (normally conditioned) can be recovered from the inside of the building to cool the hot air that enters from the outside in this warm season. This, of course, also renews the air.

Currently, the majority of heat recovery units do not measure the airflow that enters or exits the building, and thus it can not be ensured that a correct ventilation or air renewal is taking place, since to do so would require the two flows that pass (without mixing) through the heat recovery unit to be equivalent in air volume, since, considering that the buildings are sealed, the only air passages are through the heat recovery unit.

Nowadays, it cannot be ensured that the supply and exhaust airflows of the building in which the heat recovery unit is installed are balanced. The imbalance of the heat recovery unit produces the effects of reduced pressure or overpressure inside the building, which leads to a loss of energy efficiency and at the same time to the potential entrance of moist air from the outside that causes condensation in cold areas of the building.

The calibration of the airflow renewal and the balancing of the installation are currently done at the moment the heat recovery unit is started up by technically competent personnel. To understand the current problem, we must point out that the air that enters from outside into the building through the supply channel passes through a filter placed in this channel of the heat recovery unit and exits through an mouth or tube that connects the air distribution installation to the inside the building, formed by tubes that branch out to all enclosures into which the building is divided, which leads to greater resistance to the air supply the smaller the tubes are, making the path thereof more difficult. In turn, the air that exits the building to the outside through the exhaust channel is normally taken from the bathrooms or moist areas of the building, and therefore the network of tubes is normally shorter than those of the supply pipes, and also passes through another filter, likewise placed inside the heat recovery unit, before exiting to the outside. Currently, only the flows of the heat recovery units can be adjusted so that they are balanced as long as the pipes of the installation are also balanced, meaning when the tubes of the supply and exhaust channels have the same pressure drops (resistance to the passage of air through the tubes). The only way the installer can balance an installation is using gate valves that limit the passage of air in areas where it is excessive, given that the flow of the same cannot be increased through the recovery unit, which translates to a loss of efficiency of the installation.

The root of the problem presented lies in the impossibility of current heat recovery units to know the real flows it is providing, for both the supply and exhaust flows. Interestingly, the only two specifications needed for choosing a specific heat recovery unit are: energy efficiency and available airflow. The manufacturers obtain these specifications in the laboratory with conditions that simulate the external installation of 100 Pa, but the real installation does not obligatorily coincide with this standard value, and moreover, the two ventilation channels will not be balanced until the installer initially balances them, but this balancing process of the installation is very complicated to perform, since the installer does not have a reliable measurement of the airflows in each channel, given that to measure the total flow of one channel it is necessary to measure each one of the partial flows from each enclosure and then add them up. With the measuring equipment used by the installers, normally anemometers with poor precision, the different forms and sizes of the grates for the exiting air make a correct measurement of the flow difficult, as errors are made in each partial measurement which oscillate between 15% and 40%; therefore, when adding these partial errors, the error in the measurement of the entire flow could be considerably large. Furthermore, the method is tedious and has do be carried out several times because the position of each valve cannot be predicted before measuring the flows. The problem of measuring the flow is complicated, however it is not the biggest problem. Once the installation is finished, it has to function in a balanced way for the rest of the useful life thereof, and this is where the serious problem lies, since the previously mentioned filters that prevent dust and volatile components in the air from crossing the heat exchanger, become dirty over time and this dirt increases the resistance to the passage of air through the same, which evidently causes a reduction in the flow. To make the problem worse, the dirt in both filters is rarely generated in the same proportion and, as a result, both flows begin to be different, leading to a guaranteed imbalance of both channels from practically the time the of the installation begins to operate, which is completely counterproductive for the functionality of the heat recovery unit. Although the filters are changed every so often, this solution does not prevent the heat recovery unit from working in an unbalanced way for a long time.

Currently, manufacturers try to solve this problem by means of the optional use of dirt sensors on the filters. These sensors are really pressure sensors that measure the value of the same in each filter and compare it to a predetermined value corresponding to a clean filter. This is a considerable improvement, but the heat recovery unit continues to function in an unbalanced way until the user, or installer, decides to change the filters, given that there is no automatic way to rebalance the flows.

To balance the installation, the supply and exhaust airflow of the exchanger must be measured, which would not only bring about this result, but would also ensure that the installation is delivering the airflow required by the applicable standards in each case. To do so, inlet rings with a backward curvature (nozzles) have been used, the functioning of which is based on applying the Bernoulli and Continuity equations, which allow the flow through a converging nozzle to be calculated based on the measurement of the static pressure drop through said nozzle, using an equation that includes a (k) factor calibration for the nozzle which in theory is kept constant, but which in practice experiences fluctuations of up to 30%, which affect the flow measurement, with an equivalent error. Based on this theory is, for example, the method and apparatus for determining the total flow rate in ventilation installations with a free suction fan, described in document WO9222790, wherein the fan inlet or inlets are at least partially defined peripherally by annular inlet wall portion that tapers in the inlet direction, and the flow rate being determined by the measurement on the suction side of the fan. US2008/108295 discloses a heat recovery unit upon which the preamble of appending claim 1 is based.

Document DE3916529 describes a method for determining the flow of a gas through heat exchangers installed as cooling devices in motorized vehicles, in which a liquid medium to be cooled flows through the channels of a cooler, for which the pressure difference of the front side of the cooler with respect to the rear part of the radiator is determined, mounting cylindrical probes, of small dimensions, on the front part and rear part of the radiator to measure the static pressure loss through the radiator. These cylindrical probes consist of tubes that are closed on one side and have a hole perpendicular to the longitudinal axis, near the closed end thereof, which is parallel to the front or rear face of the radiator. Hoses are mounted on the opposite end of each one of these tubes, through which the pressure is eliminated through manometers that measure the exhaust pressure of each side of the radiator. With the aid of a curve that represents the pressure loss of the cooling airflow as a function of the cooling airflow, specifically for a radiator, the pressure loss is able to be determined, and by searching for the value of the pressure loss measured on the curve, the cooling airflow associated with this value can be read.

This method is more precise than the previously described method, but the way of determining the pressure difference based on the pressure measurement of one side and then another side of the cooler and then finding the pressure difference, is still very imprecise and, therefore, it can lead to significant errors since, because added to the error in the pressure measurement on one side is the error in the pressure measurement of the other side, and thus there is always a double error. If we transfer this to a heat recovery unit in which it is necessary to measure the supply flow and the exhaust flow, it is easy to deduce that expected error in a measurement will have to be multiplied by 4 to find the final expected error in an installation of this type.

Another problem in existing heat recovery unit installations is the lack of protection from the freezing of the rotor of the exchanger.

### Description of the invention

The invention provides a heat recovery unit that uses a method for measuring the supply airflow and the exhaust airflow with greater precision than any of the existing methods, which further allows the installation in which the same is mounted to be permanently and automatically balanced. To do so it directly calculates the pressure loss in each one of the channels, and based on said loss determines the airflow that passes through the heat recovery unit through the supply and exhaust channels, thereby solving two of the problems presented: knowing the renewal airflow of the installation and automatically balancing it, to thereby maintain the desired pressure inside of the building, in reference to the outside.

The recovery device proposed also allows the beginning of the freezing process in the rotor of the exchanger to be detected, since when the same begins to occur there is an almost instantaneous increase in the pressure of the rotor of the exchanger, wherein the pressure of the two pipes that pass through the same is being measured, which allows a strategy to be adopted to prevent such a negative effect for the functioning of the device.

With the aim of achieving the objectives proposed and avoiding the aforementioned drawbacks in the previously mentioned devices, the invention proposes a device with the characteristics of claim 1.

For a better understanding of these and other characteristics of the present invention, the following description is provided with the help of the drawings that are attached at the end of the present specification, which show an exemplary embodiment of the invention. In these drawing the following is represented:
- Fig. 1 shows a diagram of a balanced heat recovery unit designed according to the invention.
- Fig. 2 schematically shows one of the differential pressure sensors (Sen1) used in this device.
- Fig. 3 shows the curves obtained in the process of characterizing a model of a heat recovery unit.

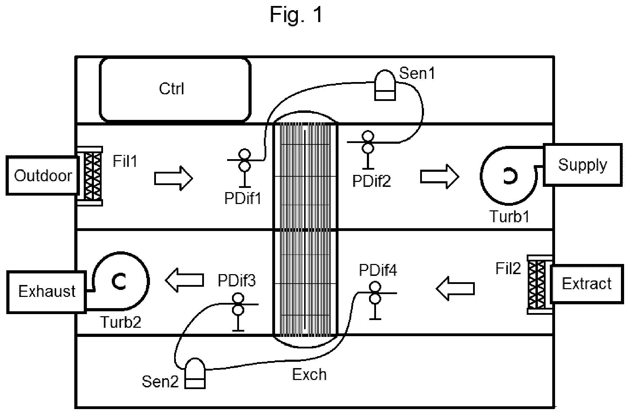

Figure 1 shows the structure of a heat recovery unit which, as is common, consists of two entirely independent and sealed airflow circuits or channels. On the one hand, there is the so-called supply channel, through which air is sucked from outdoors by means of a fan or turbine and driven to the inside of the building. On the other hand, there is the so-called exhaust channel, in which a fan or turbine (Turb2) is installed which sucks air from the inside of the building, expelling it to the outside. Both channels pass through the heat exchanger (Exch), in which, without mixing, the air that flows in both directions exchanges the calorific value thereof. Filters (Fil1, Fil2) are placed both at the inlet of the supply channel and the inlet of the exhaust channel, which prevent dust and volatile components of the air from crossing the heat exchanger (Exch) in any direction.

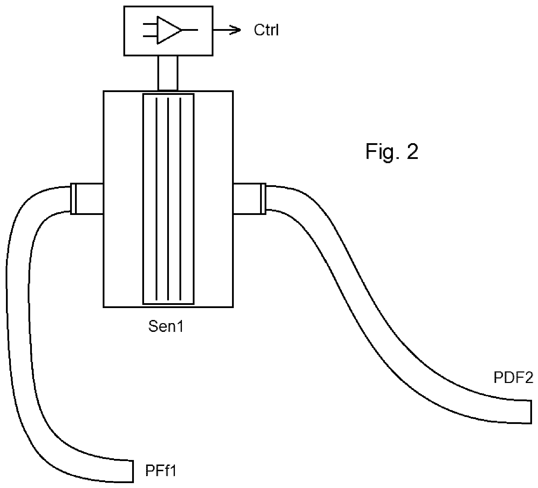

According to an important characteristic of the invention, to measure the airflow that circulates through both channels, which will allow us to also balance the recovery unit, both devices intended for measuring the pressure loss produced in the air when passing through the exchanger are placed in each one of the channels. Each one of these devices (see Fig. 2) is made up of a differential pressure sensor (Sen1, Sen2), which determines the pressure drop in the exchanger (Exch) in the supply and exhaust channel, respectively. Each sensor (Sen1, Sen2) incorporates two ports for air entry (PDif1, PDif2) for the sensor (Sen1) and (PDif3, PDif4) for the sensor (Sen2), oriented windward and situated, respectively, on both sides of the exchanger (Exch).

The heat recovery unit is a device that also incorporates the necessary electronics for the functioning thereof, as well as a controller (Ctrl) through which the speed at which the fans (Turb1) and (Turb2) function is adjusted for maintaining the flow regime in the respective supply and exhaust channels for air circulation. This controller (Ctrl) therefore receives an electrical signal from each one of the differential pressure sensors (Sen1, Sen2), which determine the pressure drop that is produced in the exchanger (Exch) in each one of the respective supply and exhaust channels. Likewise, the controller includes a value matrix saved in the memory thereof in which the differential pressure values corresponding to the airflow for each one of the channels, supply or exhaust, are stored, for each specific type of heat recovery unit.

The controller therefore precisely determines the airflow in each channel based on the differential pressure reading of the corresponding sensor (Sen1) or (Sen2). As a result, it also balances the installation, ensuring that the supply airflow is equal to the exhaust airflow at all times, or to maintain the desired pressure inside the building, in reference to the outside.

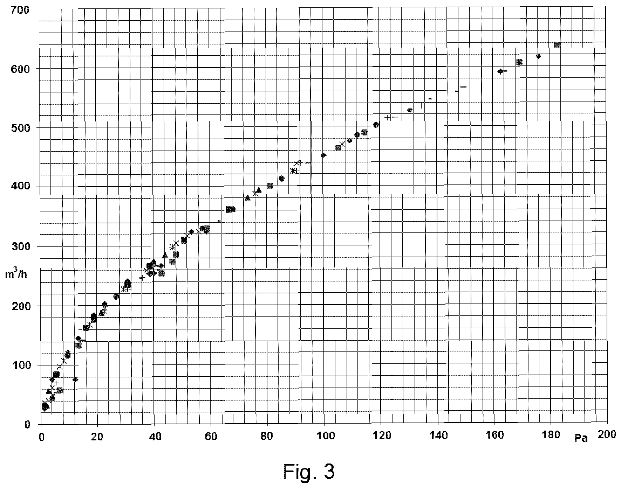

To make the cited value matrix, represented in Fig. 3, we begin by drawing a "characteristic" table for each heat recovery model in a specialized laboratory. This table represents the pressure loss (Pa) values as a function of the airflow (m³/h) that circulates through each one of the channels of the exchanger (Exch), taking a number of measurements with different airflows. To do so the device is put into operation and the flow is externally measured with precision devices and the process is repeated varying the supply flow by means of valves placed on the supply pipes, without varying the speed of the turbines (Turb1, Turb2), thereby achieving a series of entries in said table. Logically, the greater number of measurements, the more entries we will have on said table and greater precision will be achieved with this method.

This way a value table is made, in which a flow value is obtained for each pressure loss measured in the exchanger (Exch) by the respective sensors (Sen1, Sen2). To increase the precision of the method, the process is repeated several times, varying the speed of the air-driving fans (Turb1, Turb2) in each process, for example with fan speeds from 40% to 100% in successive steps, varying said speed by 10%. This reiteration in creating successive tables is done because small variations have been observed for the same flow (related to the pressure loss in the installation), in the pressure loss, depending on the speed of the fan, which can reach 10% in the most extreme cases. Finally, a value matrix is obtained that provides us with the pressure drop that is produced in each channel of the recovery unit based on the speed of each fan and the flow.

The matrix obtained is stored in the memory of a programmable automat, or under the control of a management software for the controller (Ctrl), stressing the fact that each recovery model has a matrix of different values, which are obtained during the characterization process in the laboratory. In the functioning of the recovery unit, the controller constantly reads, every millisecond for example, the value of the pressure loss in the air that circulates through the supply and exhaust channels through the exchanger and based on this data and on the speed of the corresponding fan (Turb1, Turb2), using the matrix obtained for this model in the laboratory, which is stored in the memory thereof, instantly determines the airflow that corresponds to that pressure loss value, which is circulating at that moment through each channel.

Among the advantages of the invention, it is worth mentioning that it does not only ensure that the airflow delivered is standard for the corresponding installation, it is also guaranteed that there is a balance between the two airflows (Supply, Exhaust) at all times and regardless of how dirty the installation and the filters (Filt1, Filt2) are which are situated at the entrance of both pipes.

The installation is automatically put into operation; to do so the controller (Ctrl) makes a "sweep" of all of the speeds for which there is a calibration value in each air supply fan (Turb1, Turb2) and measures the values of pressure loss in each one of the pressure sensors (Sen1, Sen2) installed, using these values as entry variables in the matrix stored on the controller itself or in a memory associated with the same to determine the airflow through the corresponding channel of the exchanger. In this sweeping process a new table is formed, which compares the value of the flow in each channel (Supply, Exhaust) based on the speed of the corresponding fan (Turb1, Turb2) at the moment of the installation, which is also stored in a memory.

The controller has a communication medium to provide information on the how dirty the filters (Fil1, Fil2) of the recovery unit are, and therefore it compares the speed that each one of the fans (Turb1, Turb2) must have at a given moment to reach the flow regime to that which they had at the moment of the installation when the filters were clean. When the required value exceeds a certain pre-established value, meaning that the corresponding filter is clogged and is in need of a substitution, the user is informed by an indicator or any other visual or audio means.

This operation is done periodically and automatically (for example, every 15 days) and the values obtained are compared to those that are stored at the moment the heat recovery unit is put into operation. Normally, in each new automatic calibration process, smaller flow values are obtained than those of the former, basically due to the increase in dirt on the air filters; with a simple calculation, the heat recovery unit knows the percent of dirt on each one of the filters, regardless of the fact that it continues adjusting the speed of the fans so that both flows continue to be balanced in spite of the dirt (normally different) on the filters.

The heat recovery unit also uses the information acquired during the installation/calibration process to balance the two ventilation channels without the installer needing to adjust the two flows by means of external valves; they simply do it by lowering the speed of the fan that is producing a greater flow in the installation until it is balanced with that of the lesser flow. This saves a significant amount of energy compared to the traditional system of increasing the pressure losses to adjust the flows.

The controller (Ctrl) of the heat recovery unit also detects when a sudden pressure increase in the rotor of the exchanger (Exch) is produced, since it is measuring the two channels that pass through it (Supply, Exhaust). This circumstance alerts us to the fact it is the beginning of the freezing process of the rotor of the exchanger, and adopts a strategy to prevent such a negative effect for the functioning of the device.

One of the advantages of the balanced installation is that it generates a thermal comfort zone and prevents a loss of efficiency due to pressure reduction or overpressure with the added problems of noise of air entering or exiting through the grates and the moisture content thereof that tends to form on cold surfaces; at the same time guaranteeing minimum energy consumption for each installation.

Knowledge of the actual flow produced by the heat recovery unit is highly useful for many other internal processes of the heat recovery unit controller, all of them saving energy and therefore increasing energy efficiency. For example, knowing the actual flow we can precisely assess the required power in a resistance of auxiliary heating that incorporates heat recovery units. It is also possible to know, by means of internal software processes, the real energy consumption of a heat recovery unit in relation to energy efficiency thereof.

## Claims

1. A balanced heat recovery unit that includes two independent airflow channels, a supply channel through which, and by means of a fan (Turb1), outdoor air is sucked and driven towards the inside of the building, and an exhaust channel through which another fan (Turb2) sucks air from the inside of the building and expels it outdoors; both channels, the supply and exhaust channels having filters (Fil1, Fil2) at the inlet thereof and, on the inside of the heat recovery unit, they pass through the exchanger (Exch) in which, without mixing, the air that circulates in both directions exchanges the calorific value thereof; which further includes an electric connection through which the exchanger and the fans (Turb1, Turb2) are powered, as well as a controller (Ctrl) that is configured to control the heat recovery unit, it furthermore comprises:
- differential pressure sensors (Sen1, Sen2) that is configured to determine the pressure drop in the exchanger (Exch) in the supply channel and in the exhaust channel, respectively, each one of which has two air inlet ports (PDif1, PDif2) and (PDif3, PDif4), oriented windward and situated respectively on both sides of the exchanger(Exch);
- **characterized in that** the controller (Ctrl) is configured to control the speed at which the fans (Turb1) and (Turb2) function to maintain the flow regime in the respective supply and exhaust channels for air circulation, which, to do so, is configured to receive an electrical signal from each one of the differential pressure sensors (Sen1, Sen2) that is a function of the pressure drop that is produced over the exchanger (Exch) in each one of said supply and exhaust channels, respectively; and **in that** it furthermore comprises:
- a memory that is configured to store a value matrix which corresponds to the airflow in each one of the channels, either supply or exhaust, based on the differential pressure produced in each one of the channels of the exchanger (Exch) and on the rotational speed of the corresponding fan (Turb1, Turb2) for the specific type of heat recovery unit; and
- a programmable automat, or software implemented in the controller (Ctrl) which is configured to determine the airflow that passes through each channel as a function of the differential pressure reading in the corresponding sensor (Sen1) or (Sen2), and based on these variables it is configured to automatically balance the installation, ensuring that the supply flow is equal to the exhaust flow at all times, or maintaining the desired pressure inside the building, in reference to the outside, varying the speed at which at least one of the fans (Turb1, Turb2) that drive the air in the channels of the heat exchange unit functions.

2. The heat recovery unit, according to claim 1, **characterized in that** the matrix that is configured to determine the airflow that passes through each channel as a function of the differential pressure reading in corresponding the sensor (Sen1, Sen2), which is stored in a memory that is accessible from an automat or from the controller (Ctrl) of the device, is unique for each heat recovery unit model and it is obtained during a characterization process done in a laboratory, wherein it is created by taking measurements of the differential pressure existing in the two sensors (Sen1, Sen2), placed on the respective supply and exhaust channels during different flow regimes and different fan (Turb1, Turb2) speeds in each one of the channels of that specific recovery unit.

3. The heat recovery unit according to the preceding claims, **characterized in that**, in the memory of the device, a second table or matrix is stored, obtained during the process in which the device is put into operation, in which the values of the flow of each channel (Supply, Exhaust) are compared, obtained by the pressure loss values measured by each one of the pressure sensors (Sen1, Sen2) of each channel, based on the speed of the corresponding fan (Turb1, Turb2) at the moment of the installation; a table that is used to compare the existing speed at a given moment in each one of the fans (Turb1, Turb2) to reach the flow regime to that which they had at the moment of the installation, when the filters were clean, to determine the degree of clogging of the filters (Fill, Fil2) or if they need to be substituted, altering the user through a communication medium associated with the controller (Ctrl) of the device.

4. The heat recovery unit, according to any of the preceding claims, **characterized in that** the controller (Ctrl) is also configured to use the information acquired during the installation process to balance the two air channels lowering the speed of the fan that is producing greater flow in the installation until the fan is balanced with the lesser flow.

5. The heat recovery unit according to any of the preceding claims, **characterized in that** the controller (Ctrl) is configured to detect any sudden increase in the pressure of the rotor of the exchanger (Exch), which is constantly measuring the two channels that pass through it (Supply, Exhaust) through the respective differential pressure sensors (Sen1, Sen2) and is configured to adopt a strategy to prevent a possible freezing process in the rotor of the exchanger.

6. A method for balancing a heat recovery unit according to claims 1 to 5 **comprising:**
- a first characterization phase of each recovery model, wherein a matrix is formed that represents the pressure loss values in each one of the recovery channels, based on the airflow that circulates through each one of the channels of the same and on the speed of the fans (Turb1, Turb2) that drive the air in the respective channels;
- a phase that is constantly developed during the operating regime of the device, in which:
- the pressure drop in the exchanger (Exch) in the respective supply and exhaust channels of the recovery unit is measured by each one of the differential pressure sensors (Sen1, Sen2);
- based on the differential pressure measured, the airflow that circulates through each one of the channels (Supply) or (Exhaust) is extracted from value matrix made in the first phase of characterization of the device for the specific type of heat recovery unit; and
- based on the airflow that passes through each channel, the rotational speed of at least one of the fans (Turb1, Turb2) existing on each channel of the recovery unit automatically varies, so that the airflow through the same corresponds to that which is established for that specific installation, and so that there is a balance, ensuring that the supply flow is equal to the exhaust flow at all times, or that it is such that the desired pressure is maintained inside the building, with respect to the outside.

7. The method according to claim 6, **characterized in that** it includes a phase in which the device is put into operation, wherein:
- a sweep is carried out of all of the speeds of the air supply fans (Turb1, Turb2) for which there is a calibration value,
- the pressure loss values in each one of the pressure sensors (Sen1, Sen2) installed are measured, to, based on the same, determine the airflow through the corresponding channel of the exchanger found in the matrix created during the characterization of the device;
- Obtaining a table that compares the flow value in each channel (Supply, Exhaust) based on the speed of the corresponding fan (Turb1, Turb2) at the moment of the installation, which is also stored in a memory;
and a phase that is constantly developed during the operating regime of the device, in which the speed each one of the fans (Turb1, Turb2) must have at a given moment to reach the flow regime is compared to that which they had at the moment of the installation, in order to determine the degree of clogging of the filers (Filt1, Fil2) placed in each one of the channels (Supply, Exhaust) of the device.

8. The method, according to claim 6, **characterized in that** it includes the phase that is constantly developed during the operating regime of the device, including a stage of detecting a sudden increase in the pressure in the rotor of the exchanger (Exch), which it is measuring in the two channels that pass through the same (Supply, Exhaust), which would determine the beginning of a freezing process of the rotor of the exchanger.

## Patentansprüche

1. Ausgeglichene Wärmerückgewinnungseinheit, die zwei unabhängige Luftstromkanäle umfasst, einen Zuluftkanal, durch den, und mittels eines Lüfters (Turb1), Außenluft angesaugt und in Richtung des Inneren des Gebäudes getrieben wird, und einen Abluftkanal, durch den ein anderer Lüfter (Turb2) Luft aus dem Inneren des Gebäudes ansaugt und diese ins Freie ausstößt; wobei beide Kanäle, die Zu- und Abluftkanäle Filter (Fil1, Fil2) am Einlass davon aufweisen und im Inneren der Wärmerückgewinnungseinheit den Wärmetauscher (Exch) durchlaufen, in dem ohne Mischen die Luft, die in beiden Richtung zirkuliert, den Heizwert davon austauscht; die weiterhin eine elektrische Verbindung einschließt, über die der Wärmetauscher und die Lüfter (Turb1, Turb2) mit Strom versorgt werden, sowie eine Steuerung (Ctrl), die zum Steuern der Wärmerückgewinnungseinheit konfiguriert ist, die des Weiteren umfasst:
- Differentialdrucksensoren (Sen1, Sen2), die konfiguriert sind, um den Druckabfall im Wärmetauscher (Exch) im Zu- bzw. im Abluftkanal zu bestimmen, wobei jeder davon zwei Lufteinlassöffnungen (PDif1, PDif2) und (PDif3, PDif4) aufweist, die windwärts ausgerichtet sind und jeweils auf beiden Seiten des Wärmetauschers (Exch) angeordnet sind;
- **dadurch gekennzeichnet, dass** die Steuerung (Ctrl) konfiguriert ist, um die Drehzahl zu steuern, mit der die Lüfter (Turb1) und (Turb2) arbeiten, um das Durchflussregime in den jeweiligen Zu- und Abluftkanälen für die Luftzirkulation beizubehalten, die deshalb konfiguriert sind, um ein elektrisches Signal von jedem der Differentialdrucksensoren (Sen1, Sen2) zu empfangen, das von dem Druckabfall abhängig ist, der über dem Wärmetauscher (Exch) in jedem der Zu- bzw. Abluftkanäle erzeugt wird; und dadurch, dass diese ferner umfasst:
- einen Speicher, der konfiguriert ist, um eine Wertematrix zu speichern, die dem Luftstrom in jedem der Kanäle, entweder Zu- oder Abluft, entspricht, basierend auf dem Differentialdruck, der in jedem der Kanäle des Wärmetauschers (Exch) erzeugt wird, und auf der Drehzahl des entsprechenden Lüfters (Turb1, Turb2) für den spezifischen Typ von Wärmerückgewinnungseinheit; und
- einen programmierbaren Automaten oder eine in die Steuerung (Ctrl) implementierte Software, die konfiguriert ist, um den Luftstrom zu bestimmen, der durch jeden Kanal in Abhängigkeit von dem Differentialdruckmesswert im entsprechenden Sensor (Sen1) oder (Sen2) strömt und, basierend auf diesen Variablen, derart konfiguriert ist, dass die Installation automatisch ausgeglichen wird, um sicherzustellen, dass der Zuluftstrom jederzeit dem Abluftstrom entspricht, oder um den gewünschten Druck innerhalb des Gebäudes in Bezug auf die Außenseite beizubehalten, durch Variieren der Drehzahl, mit der mindestens einer der Lüfter (Turb1, Turb2), welche die Luft in den Kanälen der Wärmetauschereinheit antreiben, arbeitet.

2. Wärmerückgewinnungseinheit nach Anspruch 1, **dadurch gekennzeichnet, dass** die Matrix, die konfiguriert ist, um den Luftstrom zu bestimmen, der durch jeden Kanal in Abhängigkeit von dem Differentialdruckmesswert in dem entsprechenden Sensor (Sen1, Sen2) strömt, der in einem Speicher gespeichert ist, auf den von einem Automaten oder von der Steuerung (Ctrl) der Vorrichtung zugegriffen werden kann, für jedes Wärmerückgewinnungseinheit-Modell einzigartig ist und der während eines in einem Labor durchgeführten Kennzeichnungsprozesses erhalten wird, wobei dieser durch Messungen des in den zwei Sensoren (Sen1, Sen2) vorhandenen Differentialdrucks erzeugt wird, die an den jeweiligen Zu- und Abluftkanälen während unterschiedlicher Durchflussregimes und unterschiedlicher Lüftergeschwindigkeiten (Turb1, Turb2) in jedem der Kanäle dieser spezifischen Rückgewinnungseinheit platziert sind.

3. Wärmerückgewinnungseinheit nach einem der vorhergehenden Ansprüche, **dadurch gekennzeichnet, dass** im Speicher der Vorrichtung eine zweite Tabelle oder Matrix gespeichert ist, die während des Prozesses erhalten wird, in dem die Vorrichtung in Betrieb genommen wird, in dem die Werte des Durchflusses jedes Kanals (Zuluft, Abluft) verglichen werden, die durch die Druckverlustwerte erhalten werden, die von jedem der Drucksensoren (Sen1, Sen2) jedes Kanals gemessen werden, basierend auf der Drehzahl des entsprechenden Lüfters (Turb1, Turb2) zum Zeitpunkt der Installation; wobei eine Tabelle, die verwendet wird, um die vorhandene Drehzahl zu einem bestimmten Zeitpunkt in jedem der Lüfter (Turb1, Turb2) zu vergleichen, um das gleiche Durchflussregime wie zum Zeitpunkt der Installation zu erreichen, als die Filter sauber waren, um den Grad der Verstopfung der Filter (Fil1, Fil2) zu bestimmen, oder, falls diese ersetzt werden müssen, der Benutzer über ein Kommunikationsmedium, das der Steuerung (Ctrl) der Vorrichtung zugeordnet ist, benachrichtigt wird.

4. Wärmerückgewinnungseinheit nach einem der vorhergehenden Ansprüche, **dadurch gekennzeichnet, dass** die Steuerung (Ctrl) auch konfiguriert ist, um die während des Installationsprozesses erfassten Informationen zu verwenden, um die zwei Luftkanäle auszugleichen, wodurch die Drehzahl des Lüfters verringert wird, der in der Installation einen größeren Durchfluss erzeugt, bis der Lüfter mit dem geringeren Durchfluss ausgeglichen ist.

5. Wärmerückgewinnungseinheit nach einem der vorhergehenden Ansprüche, **dadurch gekennzeichnet, dass** die Steuerung (Ctrl) konfiguriert ist, um einen plötzlichen Druckanstieg des Rotors des Wärmetauschers (Exch) zu erfassen, der konstant die zwei Kanäle misst, die dadurch (Zuluft, Abluft) durch die jeweiligen Differentialdrucksensoren (Sen1, Sen2) laufen und konfiguriert ist, um eine Strategie zur Verhinderung eines möglichen Gefrierprozesses im Rotor des Wärmetauschers anzunehmen.

6. Verfahren zum Ausgleichen einer Wärmerückgewinnungseinheit nach einem der Ansprüche 1 bis 5, umfassend:
- eine erste Kennzeichnungsphase jedes Rückgewinnungsmodells, wobei eine Matrix gebildet wird, die für die Druckverlustwerte in jedem der Rückgewinnungskanäle steht, basierend auf dem Luftstrom, der durch jeden der Kanäle davon zirkuliert, und auf der Drehzahl der Lüfter (Turb1, Turb2), welche die Luft in den jeweiligen Kanälen antreiben;
- eine Phase, die während des Betriebregimes der Vorrichtung konstant entwickelt wird, wobei:
- der Druckabfall im Wärmetauscher (Exch) in den jeweiligen Zu- und Abluftkanälen der Rückgewinnungseinheit von jedem der Differentialdrucksensoren (Sen1, Sen2) gemessen wird;
- basierend auf dem gemessenen Differentialdruck der Luftstrom, der durch jeden der Kanäle (Zuluft) oder (Abluft) zirkuliert, aus der Wertematrix extrahiert wird, die in der ersten Phase der Kennzeichnung der Vorrichtung für den spezifischen Typ von Wärmerückgewinnungseinheit erstellt wurde; und
- basierend auf dem Luftstrom, der durch jeden Kanal strömt, sich die Drehzahl von mindestens einem der Lüfter (Turb1, Turb2), die auf jedem Kanal der Rückgewinnungseinheit vorhanden sind, automatisch ändert, so dass der Luftstrom dadurch demjenigen entspricht, der für diese spezielle Installation erstellt wurde, und so dass ein Ausgleich vorhanden ist, der sicherstellt, dass der Zuluftstrom jederzeit dem Abluftstrom entspricht oder dass der gewünschte Druck innerhalb des Gebäudes in Bezug auf die Außenseite beibehalten wird.

7. Verfahren nach Anspruch 6, **dadurch gekennzeichnet, dass** es eine Phase einschließt, in der die Vorrichtung in Betrieb genommen wird, wobei:
- ein Streichen aller der Drehzahlen der Luftzufuhrlüfter (Turb1, Turb2), für die ein Kalibrierungswert vorliegt, ausgeführt wird,
- die Druckverlustwerte in jedem der installierten Drucksensoren (Sen1, Sen2) gemessen werden, um darauf basierend den Luftstrom durch den entsprechenden Kanal des Wärmetauschers zu bestimmen, der in der Matrix vorliegt, die während der Kennzeichnung der Vorrichtung erzeugt wurde;
- Erhalten einer Tabelle, in welcher der Durchflusswert in jedem Kanal (Zuluft, Abluft) basierend auf der Drehzahl des entsprechenden Lüfters (Turb1, Turb2) zum Zeitpunkt der Installation verglichen wird, der ebenfalls in einem Speicher gespeichert ist; und eine Phase, die während des Betriebregimes der Vorrichtung konstant entwickelt wird, in der die Drehzahl, die jeder Lüfter (Turb1, Turb2) zu einem bestimmten Zeitpunkt, um das Durchflussregime zu erreichen, aufweisen muss, mit derjenigen verglichen wird, das sie zum Zeitpunkt der Installation aufwiesen, um den Grad der Verstopfung der Filter (Filt1, Fil2) zu bestimmen, die in jedem der Kanäle (Zuluft, Abluft) der Vorrichtung platziert sind.

8. Verfahren nach Anspruch 6, **dadurch gekennzeichnet, dass** es die Phase einschließt, die während des Betriebsregimes der Vorrichtung konstant entwickelt wird, einschließlich einer Phase, in der ein plötzlicher Druckanstieg im Rotor des Wärmetauschers (Exch) erfasst wird, den sie in den zwei Kanälen misst, die dadurch laufen (Zuluft, Abluft), was den Beginn eines Gefrierprozesses des Rotors des Wärmetauschers bestimmen würde.

## Revendications

1. Unité de récupération de chaleur équilibrée qui inclut deux canaux d'écoulement d'air indépendants, un canal d'alimentation à travers lequel, et au moyen d'un ventilateur (Turb1), l'air extérieur est aspiré et conduit vers l'intérieur du bâtiment, et un canal d'évacuation à travers lequel un autre ventilateur (Turb2) aspire l'air de l'intérieur du bâtiment et l'expulse à l'extérieur ; les deux canaux, les canaux d'alimentation et d'évacuation ayant des filtres (Fil1, Fil2) à l'entrée de ceux-ci et, à l'intérieur du récupérateur de chaleur, ils traversent l'échangeur (Exch) où, sans se mélanger, l'air qui circule dans les deux directions échange la valeur calorifique de celui-ci ; qui inclut en outre une connexion électrique à travers laquelle l'échangeur et les ventilateurs (Turb1, Turb2) sont alimentés, ainsi qu'un contrôleur (Ctrl) qui est configuré pour contrôler l'unité de récupérateur de chaleur, elle comprend en outre :
- des capteurs de pression différentielle (Sen1, Sen2) qui sont configurés pour déterminer la chute de pression dans l'échangeur (Exch) dans le canal d'alimentation et dans le canal d'évacuation, respectivement, dont chacun a deux orifices d'entrée d'air (PDif1, PDif2) et (PDif3, PDif4), orientés du côté du vent et situés respectivement de part et d'autre de l'échangeur (Exch) ;
- **caractérisée en ce que** le contrôleur (Ctrl) est configuré pour contrôler la vitesse à laquelle les ventilateurs (Turb1) et (Turb2) fonctionnent pour maintenir le régime d'écoulement dans les canaux d'alimentation et d'évacuation respectifs pour la circulation de l'air, qui, pour ce faire, est configuré pour recevoir un signal électrique de chacun des capteurs de pression différentielle (Sen1, Sen2) qui est fonction de la chute de pression qui se produit sur l'échangeur (Exch) dans chacun desdits canaux d'alimentation et d'évacuation, respectivement ; et **en ce qu'**elle comprend en outre :
- une mémoire qui est configurée pour stocker une matrice de valeurs qui correspond à l'écoulement d'air dans chacun des canaux, soit d'alimentation soit d'évacuation, sur la base de la pression différentielle produite dans chacun des canaux de l'échangeur (Exch) et de la vitesse de rotation du ventilateur correspondant (Turb1, Turb2) pour le type spécifique d'unité de récupération de chaleur ; et
- un automate programmable, ou logiciel mis en œuvre dans le contrôleur (Ctrl) qui est configuré pour déterminer
l'écoulement d'air qui traverse chaque canal en fonction de la lecture de pression différentielle dans le capteur correspondant (Sen1) ou (Sen2), et sur la base de ces variables il est configuré pour équilibrer automatiquement l'installation, s'assurant que l'écoulement d'alimentation est à tout moment égal à l'écoulement d'évacuation, ou maintenant la pression souhaitée à l'intérieur du bâtiment, en référence à l'extérieur, variant la vitesse à laquelle au moins l'un des ventilateurs (Turb1, Turb2) qui entraînent l'air dans les canaux de l'unité d'échange de chaleur fonctionne.

2. Unité de récupération de chaleur, selon la revendication 1, **caractérisée en ce que** la matrice qui est configurée pour déterminer l'écoulement d'air qui traverse chaque canal en fonction de la lecture de la pression différentielle dans le capteur correspondant (Sen1, Sen2), qui est stockée dans une mémoire qui est accessible depuis un automate ou depuis le contrôleur (Ctrl) du dispositif, est unique pour chaque modèle d'unité de récupération de chaleur et elle est obtenue pendant un processus de caractérisation fait dans un laboratoire, dans laquelle elle est créée en prenant des mesures de la pression différentielle existant dans les deux capteurs (Sen1, Sen2), placés sur les canaux d'alimentation et d'évacuation respectifs pendant différents régimes d'écoulement et différentes vitesses de ventilateurs (Turb1, Turb2) dans chacun des canaux de cette unité de récupération spécifique.

3. Unité de récupération de chaleur selon les revendications précédentes, **caractérisée en ce que**, dans la mémoire du dispositif, un(e) deuxième tableau ou matrice est stocké(e), obtenu(e) pendant le processus où le dispositif est mis en opération, où les valeurs de l'écoulement de chaque canal (Alimentation, Évacuation) sont comparées, obtenues par les valeurs de perte de pression mesurées par chacun des capteurs de pression (Sen1, Sen2) de chaque canal, sur la base de la vitesse du ventilateur correspondant (Turb1, Turb2) au moment de l'installation ; un tableau qui est utilisé pour comparer la vitesse existante à un moment donné dans chacun des ventilateurs (Turb1, Turb2) pour atteindre le régime d'écoulement qu'ils avaient au moment de l'installation, quand les filtres étaient propres, pour déterminer le degré de colmatage des filtres (Fil1, Fil2) ou s'ils doivent être remplacés, alertant l'utilisateur à travers un support de communication associé au contrôleur (Ctrl) du dispositif.

4. Unité de récupération de chaleur, selon l'une quelconque des revendications précédentes, **caractérisée en ce que** le contrôleur (Ctrl) est également configuré pour utiliser les informations acquises pendant le processus d'installation pour équilibrer les deux canaux d'air en abaissant la vitesse du ventilateur qui produit un plus grand écoulement dans l'installation jusqu'à ce que le ventilateur soit équilibré avec le plus petit écoulement.

5. Unité de récupération de chaleur selon l'une quelconque des revendications précédentes, **caractérisée en ce que** le contrôleur (Ctrl) est configuré pour détecter toute augmentation soudaine de la pression du rotor de l'échangeur (Exch), qui mesure en permanence les deux canaux qui le traversent (Alimentation, Évacuation) à travers les capteurs de pression différentielle respectifs (Sen1, Sen2) et est configuré pour adopter une stratégie pour éviter un éventuel processus de congélation dans le rotor de l'échangeur.

6. Procédé d'équilibrage d'une unité de récupération de chaleur selon les revendications 1 à 5
**comprenant :**
- une première phase de caractérisation de chaque modèle de récupération, dans lequel une matrice est formée qui représente les valeurs de perte de pression dans chacun des canaux de récupération, sur la base de l'écoulement d'air qui circule à travers chacun des canaux de celui-ci et de la vitesse des ventilateurs (Turb1, Turb2) qui entraînent l'air dans les canaux respectifs ;
- une phase qui est constamment développée pendant le régime opérationnel du dispositif, où :
- la chute de pression dans l'échangeur (Exch) dans les canaux respectifs d'alimentation et d'évacuation du récupérateur est mesurée par chacun des capteurs de pression différentielle (Sen1, Sen2) ;
- sur la base de la pression différentielle mesurée, l'écoulement d'air qui circule à travers chacun des canaux (Alimentation) ou (Évacuation) est extrait de la matrice de valeurs réalisée dans la première phase de caractérisation du dispositif pour le type spécifique d'unité de récupération de chaleur ; et
- sur la base de l'écoulement d'air qui traverse chaque canal, la vitesse de rotation d'au moins l'un des ventilateurs (Turb1, Turb2) existant sur chaque canal de l'unité de récupération varie automatiquement, de sorte que l'écoulement d'air à travers celui-ci correspond à celui qui est établi pour cette installation spécifique, et de sorte qu'il y ait un équilibre, s'assurant que l'écoulement d'alimentation est à tout moment égal à l'écoulement d'évacuation, ou qu'il est tel que la pression souhaitée est maintenue à l'intérieur du bâtiment, par rapport à l'extérieur.

7. Procédé selon la revendication 6, **caractérisé en ce qu'**il inclut une phase où le dispositif est mis en opération, dans lequel :
- un balayage est effectué de toutes les vitesses des ventilateurs d'alimentation en air (Turb1, Turb2) pour lesquels il existe une valeur d'étalonnage,
- les valeurs de perte de pression dans chacun des capteurs de pression (Sen1, Sen2) installés sont mesurées, pour, sur la base de celles-ci, déterminer l'écoulement d'air à travers le canal correspondant de l'échangeur trouvé dans la matrice créée pendant la caractérisation du dispositif ;
- Obtention d'un tableau comparant la valeur d'écoulement dans chaque canal (Alimentation, Évacuation) sur la base de la vitesse du ventilateur correspondant (Turb1, Turb2) au moment de l'installation, qui est également stocké dans une mémoire ;
et une phase qui est constamment développée pendant le régime opérationnel du dispositif, où la vitesse que chacun des ventilateurs (Turb1, Turb2) doit avoir à un moment donné pour atteindre le régime d'écoulement est comparée à celle qu'ils avaient au moment de l'installation, afin de déterminer le degré de colmatage des filtres (Filt1, Fil2) placés dans chacun des canaux (Alimentation, Évacuation) du dispositif.

8. Procédé, selon la revendication 6, **caractérisé en ce qu'**il inclut la phase qui est constamment développée pendant le régime opérationnel du dispositif, incluant une étape consistant à détecter une augmentation brutale de la pression dans le rotor de l'échangeur (Exch), qu'il mesure dans les deux canaux qui le traversent (Alimentation, Évacuation), ce qui déterminerait le début d'un processus de congélation du rotor de l'échangeur.
